# EUROPEAN PATENT SPECIFICATION

(11) **EP 4 377 179 B1**
(45) Date of publication and mention of the grant of the patent: **31.12.2025**
(21) Application number: 21820178.8
(22) Date of filing: 24.11.2021
(51) Int. Cl.: B60W 50/06, B60W 60/00, B60W 50/029, B60W 50/038, B60K 28/10, H04L 9/40

(54) **METHOD FOR OPERATING AN AUTONOMOUS DRIVING VEHICLE**
VERFAHREN ZUM BETREIBEN EINES AUTONOM FAHRENDEN FAHRZEUGS
PROCÉDÉ D'OPÉRATION D'UN VÉHICULE AUTONOME

(43) Date of publication of application: 05.06.2024
(73) Proprietor: CARIAD SE, 38440 Wolfsburg (DE)
(72) Inventor: MAX, Stephan, 38518 Gifhorn (DE); UZUN, Serdal, 44892 Bochum (DE); BRIESE, Stefan, 45886 Gelsenkirchen (DE); GROSSETTI, Giovanni, 44623 Herne (DE); MFON, Emmanuel Veranyuy, 42119 Wuppertal (DE); JOSHI, Bhushan, 90431 Nürnberg (DE)
(74) Representative: Hofstetter, Schurack & Partner
(86) International application number: PCT/EP2021/082883
(87) International publication number: WO 2023/093980

(56) References cited:
- DE-A1- 102017 214 531
- DE-A1- 102018 119 468
- DE-A1- 102019 113 963
- DE-A1- 102019 134 766
- US-A1- 2020 051 434
- US-A1- 2020 406 908
- US-A1- 2020 412 742
- US-A1- 2021 331 712
- SURBHI SHARMA ET AL: "A survey on internet of vehicles: Applications, security issues & solutions", VEHICULAR COMMUNICATIONS, vol. 20, 1 December 2019 (2019-12-01), NL, pages 100182, XP055686903, ISSN: 2214-2096, DOI: 10.1016/j.vehcom.2019.100182

## Description

The invention is concerned with a method for operating an autonomous driving vehicle. The invention is furthermore concerned with a vehicle, a computer program product and a processing unit configured to carry out such a method.

A vehicle can provide an autonomous driving mode. If the vehicle is operated in the autonomous driving mode, a processing unit of the vehicle typically provides control commands for longitudinal and transverse guidance of the vehicle. In other words, accelerating and decelerating of the vehicle by a drive and brake system of the vehicle providing longitudinal guidance as well as steering of the vehicle by a steering system providing transverse guidance are controlled by the processing unit of the vehicle. Hence, no manual input regarding longitudinal and transverse guidance of the vehicle is necessary during autonomous driving. The processing unit can be referred to as control unit or central control unit of the vehicle.

EP 3 301 530 A1 shows a control method for an autonomous vehicle comprising acquiring information related to the vehicle, determining whether the vehicle needs to be remotely controlled, and in case of a positive determination, remotely controlling the autonomous vehicle by a server or a nearby object. If a discrepancy between an information related to the driving of the vehicle stored in the server and an information transmitted by the vehicle is detected, the remote control of the vehicle is activated.

DE 10 2019 134 766 A1 discloses a method and device for processing sensor data in a vehicle. A modeling unit for creating an environment model of an environment of a vehicle is described. The modeling unit is set up to receive sensor data relating to the surroundings of the vehicle from a plurality of different sensors, and to receive integrity information relating to the respective integrity of the sensor data of the individual sensors from the plurality of sensors.

DE 10 2017 214 531 A1 discloses a method for operating a motor vehicle in an automated driving operation comprising receiving a status signal of a respective sensor associated with the motor vehicle, wherein the status signal comprises information about a performance and/or about a functionality of the respective sensor.

It is an object of the invention to provide autonomous driving of a vehicle in a situation in which a device and/or service relevant for autonomous driving is negatively affected.

The object is accomplished by the subject matter of the independent claims. Advantageous developments with convenient and non-trivial further embodiments of the invention are specified in the following description, the dependent claims and the figures.

A first aspect of the invention is concerned with a method for operating an autonomous driving vehicle. The method is preferably a computer implemented method. The vehicle comprises a processing unit, meaning a processor, configured to carry out the steps of the method. The processing unit can be alternatively referred to as control unit of the vehicle. The processing unit may provide longitudinal and transverse guidance of the vehicle. It may hence determine and provide a control command for a drive, brake and steering system of the vehicle to provide autonomous driving of the vehicle.

The method is based on the observation that an internal and/or external interference may affect the autonomous driving vehicle. Such an interference may be a faulty component as internal interference and/or a hacker attack on the vehicle as external interference. Due to the interference, the vehicle should no longer be operated in an autonomous driving mode. In general, autonomous driving requires a high standard of security and safety in regard of a device and/or a service of a vehicle relevant for autonomous driving. Therefore, typically at least one counter measure for unintended internal and/or external interference on an autonomous driving vehicle have to be considered, so that the autonomous driving vehicle stays at least semi-functional in case of the interference. It is hence beneficial to provide further autonomous driving modes providing reduced autonomous driving functions compared to the fully autonomous driving mode. The further autonomous driving modes are fallback autonomous driving modes in case the fully autonomous driving mode is no longer without restriction trustworthy and reliable.

A step of the inventive method comprises determining a functional state information. The functional state information represents a functional state of a device and/or a service relevant for autonomous driving of the vehicle. The device can be a device of the vehicle, such as a sensor, for example a camera, a light detection and ranging (Lidar) device and/or an infrared sensor. The functional state of the device comprises, for example, the information whether the device is at the moment fully functional or not. The service can be a vehicle service, such as a traffic jam warning provided by a navigation system of the vehicle. The service relevant for autonomous driving of the vehicle receives, for example, data from an external device, such as an external processing device. The received data may be traffic data representing a current state of traffic and other road users in an environment of the vehicle. Such data, for example, can be provided for the vehicle as a service that supports the autonomous driving mode of the vehicle. The functional state can alternatively be referred to as a functional condition and/or a situation regarding the vehicle and/or a service that is necessary to provide a fully autonomous driving mode of the vehicle.

The functional state information is preferably a value. The functional state information can be, for example, 0, if all devices and services relevant for autonomous driving are working flawlessly and unrestricted. In case of, for example, a malfunction of a sensor of the vehicle, and/or a limitation regarding a service, for example, if the vehicle is receiving limited data, and/or a hacker attack on the vehicle that affects at least one device or service relevant for autonomous driving, the functional state information is higher than 0. Preferably, the functional state information is a value between 0 and 1. Alternatively or additionally, the functional state information can be a percent value. Preferably, a common functional state results in a common functional state information value, meaning that the malfunction of a front camera and the malfunction of the Lidar device preferably result in the same functional state information or in values for the respective functional state information which are in a comparable value range and may therefore be considered as values indicating a common functional state. The comparable value range may comprise deviations of up to 0.1 percent, 0.5 percent, 1 percent, 2 percent, 3 percent, 5 percent, 10 percent, 20 percent and/or 30 percent. The comparable value range may comprise deviations between 0.01 percent and 30 percent, 0.1 percent and 20 percent, 0.5 percent and 10 percent, 1 percent and 5 percent, and/or 2 and 3 percent. It may comprise any value range in between the listed values.

A further step comprises switching a driving mode of the vehicle from an autonomous driving mode to one of multiple functional state dependent reduced autonomous driving modes. Each of the multiple reduced autonomous driving modes is activated depending on the determining functional state information. The switching occurs, if the determined functional state information is greater than a threshold value of the respective reduced autonomous driving mode. The multiple reduced autonomous driving modes differ from one another in a level of restriction of at least one autonomous function compared to the autonomous driving mode. The at least one autonomous function can be provided by the device and/or service relevant for autonomous driving. In the autonomous driving mode, in which the vehicle drives fully autonomously, all autonomous functions are provided unrestrictedly, meaning they are fully functional. The at least one autonomous function can comprise, for example, a speed limit, an amount of sensor data captured by the sensor of the vehicle and/or received by the vehicle, and/or a limitation of an online and/or offline function of the driving mode. The autonomous driving mode can alternatively be referred to as a fully autonomous driving mode, more precisely as an online/offline fully autonomous driving mode or online and offline fully autonomous driving mode.

The expressions "online" and "offline" in this context refer to a possible communication connection between the vehicle and the external device such as the external processing device and/or the other vehicle. The vehicle may transmit vehicle data to the external device or receive data from the external device via the communication connection. An online function requires the communication connection in order to provide its full range of functionality. An offline function is completely implemented on the processing unit of the vehicle so that no external data is required in order to provide the offline function of the autonomous driving mode or any of the reduced autonomous driving modes. In other words, while driving in the autonomous driving mode, all functions implemented in the processing unit of the vehicle as well as all functions requiring external data from the external device are fully functional. Compared to this, a reduced autonomous driving mode can be an offline mode, meaning that all online functions are deactivated. This is because the deactivation of the online functions results in a restriction of the autonomous functions based on data exchange with the external device. Hence, a level of reduction of the at least one autonomous function is higher for the reduced driving mode compared to the fully autonomous driving mode with preferably no reduction of the at least one autonomous function.

Preferably, for every one of the multiple reduced autonomous driving modes an individual threshold value exists. For every determined functional state information, the highest threshold value exceeded by the respective functional state information is considered. If, for example, the limitation of the service results in a functional state information of 0.2, whereas a malfunction of the sensor results in a functional state information of 0.4, these two different functional state information are preferably greater than two different threshold values, so that, for example, a first threshold value is exceeded by the functional state information related to the limited service, whereas a second threshold value is surpassed by the functional state information related to the malfunction of the sensor. This means that there can be different reduced autonomous driving modes for these two different situations, meaning for the two different functional states. There is hence a first reduced autonomous driving mode for the limitation of the service and a second reduced autonomous driving mode for the malfunction of the sensor, wherein the first and second reduced autonomous driving modes differ from one another.

Preferably, a common functional state results in functional state information which are greater than a common threshold value so that the driving mode is switching to the same reduced autonomous driving mode in case of a common functional state. This means that, for example, all malfunctions of a device of the vehicle, such as the sensor, result in a common reduced autonomous driving mode, whereas all limitations of services, for example errors correlated to the communication connection to the external device, are also all resulting in a common but different reduced autonomous driving mode.

The two described steps are preferably performed by the processing unit of the vehicle.

In general, the expression "information" refers to a kind of data and/or at least a data element that represents a specific abstract information typically in the form of a value and/or percent value.

First, the vehicle is typically operated in the autonomous driving mode. After performing the two described steps in case of a determined functional state information which is greater than a threshold value of the resulting reduced autonomous driving mode, the vehicle can be operated in one of the reduced driving modes depending on the determined functional state information. Typically, a user of the vehicle, meaning a passenger and/or driver, is informed about the currently activated driving mode and any transition between driving modes. Therefore, for example, a visible warning and/or notice is displayed on a display device within the vehicle, such as a touch display or a display. Alternatively or additionally, a loudspeaker of the vehicle can provide an acoustic warning and/or notice. In this case, a warning and/or notice sound and/or a voice output is providable.

Preferably, the autonomous driving mode may be deactivated at any time and in any mode in case of a manual intervention of the passenger, meaning the driver of the vehicle.

By determining the functional state information, it is hence possible to determine a suitable reduced autonomous driving mode, which depends on the actual functional state of the device and/or service of the vehicle that is relevant for autonomous driving. There is hence no switching from the fully autonomous driving mode to one reduced autonomous driving mode but switching to a specific reduced autonomous driving mode out of multiple different reduced autonomous driving modes, wherein the specific reduced autonomous driving mode depends on the actual functional state of the device and/or service relevant for autonomous driving of the vehicle. This allows for a very detailed and situation specific reaction in case of any problem related to the device and/or service relevant for autonomous driving. Due to the switching to the specific reduced autonomous driving mode autonomous driving of the vehicle is provided in a situation in which the device and/or service relevant for autonomous driving is negatively affected.

The invention comprises that the functional state information comprises a performance reduction information. The performance reduction information represents a reduction of a performance of the device and/or service relevant for autonomous driving of the vehicle. The device is, for example, a vehicle component such as the sensor device, for example, the front camera or the Lidar device of the vehicle. The service is, for example, an operating resource of the vehicle, for example, a processing power or a data bandwidth for internal and/or external communication and/or data transmittance from the vehicle to the external device or vice versa. The service hence provides, for example, traffic data or weather data for the processing unit of the autonomous driving vehicle. In case, for example, the front camera of the vehicle is not functioning properly, this malfunction is represented by the performance reduction information which quantifies in this example a reduced camera performance of the front camera due to the malfunction. In other words, the performance reduction information quantifies the performance reduction of the device of the vehicle relevant for autonomous driving. If, for example, the processing power of the processing unit of the vehicle is reduced due to a technical defect of the processing unit, this information may as well be represented by the performance reduction information that quantifies the performance reduction of the processing unit. In other words, the performance reduction information quantifies the performance reduction of the service of the vehicle relevant for autonomous driving. The performance reduction information gives hence detailed information on the functional state of the device and/or the service and is hence a useful and reliable information to be considered to provide the functional state information.

An embodiment comprises that if the performance reduction information represents a limitation of a vehicle processing power of the processing unit of the vehicle and/or a data transfer, meaning a limitation of a data transfer within the vehicle or between the vehicle and the external device, the assigned reduced autonomous driving mode limits at least one function of the vehicle which is non-relevant for autonomous driving. The reduced autonomous driving mode may be referred to as online/offline fully autonomous driving mode with limited non-relevant functions. In this driving mode, the autonomous driving of the vehicle is still fully supported but non-relevant functions for autonomous driving are stopped temporarily and/or deactivated to allow the usage of the full available bandwidth and/or the full available processing power of the processing unit for autonomous driving related functions. In a case of resource limitation regarding, for example, the services relevant for autonomous driving it is achieved by focusing on functions relevant for autonomous driving, it might be possible to provide enough data bandwidth and/or processing power for the autonomous driving relevant functions. Therefore, autonomous driving is continued although the limitations in the autonomous driving relevant service exist.

A non-relevant and hence limited function is, for example, a comfort function of the vehicle, such as a seat heating and/or a multimedia system, such as a music and/or radio player of the vehicle. If a function is relevant for autonomous driving or not is predetermined and may be quantified by a prioritization information. The prioritization information may be stored for each function of the autonomous driving mode, for example, in a data storage unit of the processing unit. Therefore, for example, a list exists in which all functions are classified as either autonomous driving relevant or autonomous driving non-relevant functions. They are preferably as well ranked in their importance for autonomous driving so that in case of, for example, reduced processing power of the processing unit it is easily decidable which functions are to be deactivated, paused or only partially provided to provide full processing power and/or data bandwidth for the autonomous driving relevant functions. The list is preferably stored in the data storage unit.

This means that, for example, a mobile online service, for example, for streaming music in the vehicle, can be stopped at least temporarily until the bottleneck in processing performance or bandwidth limitation is over, meaning until full or at least sufficient data bandwidth and/or processing power is provided. Another example is based on the observation that a non-relevant function for autonomous driving uses data traffic on an internal bus system of the vehicle. In case, the limitation of data bandwidth was observed within the vehicle, meaning that no full bandwidth for data traffic on the internal bus system is provided, for example, a device of the vehicle can reduce its data traffic to the processing unit by, for example, only transmitting every second data element captured and/or determined by the respective device. The device in this example is preferably a sensor.

It is furthermore or alternatively possible to observe data traffic within and to the vehicle. If, for example, a large amount of generated and/or received data is observed, which is particularly larger than respective data generated and/or received under usual conditions, the large amount of data can as well indicate that the vehicle processing power and/or the data bandwidth is limited.

According to the invention, if the performance reduction information represents a disruption and/or failure of the device, particularly the sensor of the vehicle, the assigned reduced autonomous driving mode increases data reception from an external device. The external device is particularly another vehicle and/or the external processing device, such as an external server. This further autonomous driving mode provides restricted autonomous functions compared to the fully autonomous driving mode because the device of the vehicle does not provide the data it usually provides but the external device. The offline functions of the vehicle are hence not functioning properly compared to the fully autonomous driving mode due to the disruption and/or failure of the device. The vehicle obtains the missing data preferably from a surrounding vehicle and/or a backend, meaning the external processing device.

Reasons for the disruption of the device are, for example, dirt and/or dust on the device and/or an obstacle in a coverage area of the device. In other words, exemplary reasons for the disruption may be a dirty camera and/or a bad view of the camera caused, for example, by an object positioned in front of a camera lens of the camera that blocks a view of the camera. Reasons for the failure of the device are, for example, a broken component of the device, such as a broken camera lens of the camera as device, and/or material ware of at least a function relevant component of the device and/or a mechanical and/or electronic error of, for example, permanent nature concerning the device. The system relevant component failure is preferably fully compensated by receiving external data from the external device. Preferably, the external device transmits sufficient data to replace all missing data due to the disruption and/or failure. The received data may be referred to as external data.

In this reduced autonomous driving mode, the vehicle remains online. This mode can hence be referred to as an online limited autonomous driving mode.

The reduced autonomous driving mode provides preferably full online autonomous functions wherein at least one offline autonomous function is not available and hence inactive. Preferably, a communication interface of the vehicle is active via which the vehicle can receive the external data. At least one other vehicle can, for example, share basic data with the vehicle and by doing so provide the external data for the vehicle. Such data provided by the external device can be at least one of the following kind of data: a minimal speed, a current speed, a maximum speed, a distance to a surrounding object, an information on a recognized object in the environment of the vehicle, position and/or identification data of the other vehicle, a virtual environment and/or virtual map data, an alert information, a danger information, a street sign information, for example, captured by a camera of the other vehicle, a captured weather condition and/or a current autonomous driving mode of the other vehicle. In case no other vehicle provides the external data, the vehicle may receive the missing data from a backend, meaning the external processing device. The external processing device can receive the respective data from at least one preceding vehicle and provide the data, for example, as a compact data package for the vehicle.

By providing the missing data from an external resource, the disruption and/or failure of the device of the vehicle is fast and economically replaced. Therefore, despite the disruption and/or failure at least a reduced autonomous driving is still possible.

The invention comprises that after switching to the assigned reduced autonomous driving mode, the method comprises determining if sufficient data is received that replaces data missing due to the disrupted and/or faulty device. If this is not the case, the method comprises switching the driving mode to a further reduced autonomous driving mode that provides only limited autonomous driving. This further reduced autonomous driving mode can be described as an online critical autonomous driving mode. The further reduced autonomous driving mode is always activated when the external device cannot provide the external data to replace the missing data.

Not sufficient data is received, for example, if only between 0 percent and 90 percent, 5 percent and 80 percent, 10 percent and 70 percent, 15 percent and 60 percent, 20 percent and 50 percent, and/or 30 percent and 40 percent of the usually available data is received. Alternatively or additionally, the limit for sufficient data may be any value in and/or between the named intervals. Alternatively or additionally, data quality may define sufficient data. For example, if the received data is of comparable or same quality compared to the data provided by the disrupted and/or faulty device, the vehicle receives sufficient data. This is, for example, the case if a resolution of received camera data corresponds to a resolution of camera data that the camera of the vehicle itself usually provides, which is however currently not providing any camera data due to, for example, dirt on the camera lens.

In other words, the vehicle switches to a reduced autonomous driving mode that is still one of the online driving modes, meaning that data is received from the external device. The driving mode changed to the further reduced autonomous driving mode because the vehicle cannot obtain the missing data due to the failing device from surrounding vehicles of the backend meaning that the received data from the external device is missing at all or simply not sufficient in order to replace the missing data. In this mode, the vehicle reduces its autonomous driving capability preferably depending on the faulty and/or disrupted device.

The online limited autonomous driving mode, meaning the driving mode in which data reception of the external device is increased, shows to be not ideal due to missing or not sufficient data from the external device, there is hence another reduced autonomous driving mode to which the current driving mode is switched in order to react to the not sufficient data provided for autonomous driving. This results in further protection for autonomous driving in case of insufficient external data provision.

Further, an embodiment comprises that the limited autonomous driving comprises limiting a speed of the vehicle to a maximum speed and/or prohibiting overtaking of other road users along a driving route of the vehicle.

The driving route is, for example, a driving path that is determined by the navigation system of the vehicle that plans a travelling route or a driving route for the vehicle from a starting position to a place of destination. This means that the autonomous functions are limited compared to the fully autonomous driving mode because overtaking is forbidden and/or a speed limit is set. The chosen speed limit and/or the prohibiting of overtaking can be dependent on the disrupted and/or faulty device, meaning that other measurements are taken in case of a disrupted camera compared to measurements taken in case of a faulty Lidar device. In case the faulty and/or disrupted device is essential for autonomous driving and no data is received that replaces the missing data, it is also possible to provide a fail-safe autonomous driving mode, meaning providing a mode in which, for example, an emergency stop routine is determined and carried out. The speed limit and the prohibiting of overtaking are particularly effective but still easily implemented measures to react to not-sufficient external data.

A preferred embodiment comprises a further determination of the functional state information while operating the vehicle in the reduced autonomous driving mode. If the determined further functional state information is smaller than or equal to the threshold value of the respective reduced autonomous driving mode, the method comprises switching back of the driving mode to a less reduced autonomous driving mode, particularly the autonomous driving mode. For example, in case that no further limitation in data bandwidth and/or processing power of the processing unit is observed according to the further functional state information, the driving mode may switch back from the online/offline fully autonomous driving mode with limited non-relevant function to the online/offline fully autonomous driving mode. In case the faulty or disrupted device functions properly again, for example, after cleaning the dirty device and/or after removing an object placed in the view area of the device, the driving mode can change back from the online limited autonomous driving mode to the online/offline fully autonomous driving mode. In case of not sufficient received data from the external device, it is possible that if, for example, the disrupted and/or faulty device functions again, the driving mode changes back from the online critical autonomous driving mode to the online/offline fully autonomous driving mode, meaning the autonomous driving mode. It is also possible that only the amount of data provided from the external device is increased so that sufficient data is received that replaces data missing due to the disrupted and/or faulty device. In this case, the driving mode changed back from the further reduced driving mode, meaning the online critical autonomous driving mode, to the online limited autonomous driving mode.

There is hence a continuing surveillance of the functional state of the device and/or service so that the reduced autonomous mode is activated only as long as there is an actual need for the reduced autonomous driving mode. As soon as the requirements for fully autonomous driving or another less reduced autonomous driving mode are regained, the driving mode hence changes back to the modes with most autonomous functions. This mode may alternatively be referred to as the most automatic mode or mode with the highest level of automation available.

Moreover, a particularly relevant embodiment comprises that the functional state information comprises a hacker attack information. The hacker attack information represents a detection of a hacker attack on the vehicle. Such a hacker attack is particularly critical for autonomous driving and requires particular care. The hacker attack on the vehicle results hence in a functional state information, which is preferably high compared to the before-mentioned functional state information. The described method hence not only considers device failure and/or disruption and/or limitation in resources, such as data bandwidth or processing power, as relevant indications that demand a reduction in the autonomous driving mode but also external hacker attacks. The method is thus particularly versatile.

Another embodiment comprises determining the hacker attack information by comparing current vehicle data captured by the device of the vehicle with determined expected data. Determining the expected data comprises applying an expectation determination algorithm on map data provided by the vehicle. The hacker attack detection requires that the compared data differ by more than a maximum deviation. The processing unit of the vehicle can compare, for example, current data provided, for example, by the camera or another vehicle internal device, such as a velocity sensor, the Lidar and/or an infrared sensor with the expected data. For example, the current vehicle data can be coordinates of the vehicle determined by a global navigation satellite system (GNSS), such as the global positioning system (GPS) and/or speed data determined by the velocity sensor of the vehicle, and/or distance data representing a distance to a surrounding object, such as a building on the side of the road on which the vehicle is driving.

The map data, however, comprise, for example, information on a position of a lane on which the vehicle is supposed to be driving, a typical speed on the road, and/or a distance to the surrounding object, such as the building on the side of the road. The expectation determination algorithm comprises instructions to determine the expected vehicle data. For example, it comprises how to determine the typical speed on the road based on map data provided by the navigation system. The map data is preferably offline data, meaning data that is stored in the data storage of the vehicle and/or the navigation system of the vehicle.

If, for example, the speed data determined by the velocity sensor matches the typical speed driven on the road according to expected data determined based on map data, there is no deviation between the compared data that is greater than the maximum deviation. If, for example, the determined coordinates indicate that the vehicle is driving on a specific lane of the road and the map data indicate that this lane is intended for driving in the direction of the vehicle, there is no deviation between the compared data that is greater than the maximum deviation. If, for example, a determined distance to the surrounding object is determined by a distance sensor of the vehicle and the determined distance matches with a distance to the object determined based on map data, there is no deviation between the compared data that is greater than the maximum deviation. In other words, vehicle data is cross checked with the respective expected data and hence with information provided based on map data. The maximum deviation may be between 0.1 percent and 30 percent, 0.5 percent and 20 percent, 1 percent and 10 percent and/or 3 percent and 5 percent. Alternatively, it may be any value in the listed intervals. Alternatively, the maximum deviation may be up to 50 percent. The details on the maximum deviation apply as well to other maximum deviations mentioned in the following. If a value of vehicle data deviates from a respective value of map data by less than the maximum deviation or by the maximum deviation, vehicle data matches the expected vehicle data so that no hacker attack is observed. However, if there is a higher deviation this indicates that the current data provided by the device are manipulated by the hacker attack.

In an alternative or additional embodiment, the hacker attack information is determined by comparing data provided by different devices of the vehicle. The data provided by the different devices, which are all vehicle devices, represents a common kind of data. Common kind of data in this sense is data that represents the same or a comparable physical property determined by applying different methods and/or measured by different devices of the vehicle. For example, the camera can collect camera data based on which a maximum speed of at least one surrounding vehicle is determined. Furthermore, the velocity sensor of the vehicle captures the speed of the vehicle itself. These velocity data are then compared to one another. In other words, a consistence check of data provided by different sensors of the vehicle can be performed. The hacker attack detection requires that the compared data differ by more than a maximum deviation. In this context, proximity or distance data to surrounding objects is particularly relevant, which can be, for example, provided by the infrared sensor and/or the Lidar device of the vehicle. Since only vehicle internal data is compared, it is possible to detect a hacker attack focused on at least one individual device of the vehicle.

Besides, another embodiment comprises determining the hacker attack information by comparing received vehicle data provided by another vehicle with respective internal vehicle data. The hacker attack detection requires that the compared data differ by more than a maximum deviation. In other words internal and external data are cross-checked for content consistency. Data provided by the other vehicle can be transmitted directly from the other vehicle to the vehicle or via an external processing device, for example, a server unit. For example, the vehicle receives from the other vehicle information on the maximum speed of the vehicle that provides the external data. The received external speed data are then compared to internal data, for example, a determined speed of the other vehicle determined by applying a respective determination algorithm on camera data provided by a camera of the vehicle. In other words, external and internal vehicle data must fit together, otherwise an error is detected that is traced back to a detected hacker attack. This is of course based on the condition that the compared data represent a common information or kind of information.

Furthermore, an embodiment comprises determining the hacker attack information by exchanging electronic key data with at least one further vehicle. A software consistency check between the exchanged electronic key data is performed. The further vehicle is preferably located in the surroundings of the vehicle. The electronic key is generated within the vehicle based on the software. For example, a hash code is generated. The electronic key data generation may rely on file sizes, file structure, tasks in process or any other data which is predicable by the processing unit of the vehicle. The electronic key data is then exchanged between at least two vehicles and preferably between more than two vehicles, preferably with all vehicles currently surrounding the vehicle.

The participating vehicles each validate the received electronic key data. An unattended intervention in the software of one of the vehicles leads to an erroneous key generation in this vehicle so that the other vehicle cannot validate the respective transmitted key. In this example, the software consistency check performed by the other vehicle hence fails since it received the erroneous key. However, the electronic key data received from the other vehicle may be correct and may be validated by the vehicle. In case validation fails, it is possible to repeat the procedure with at least one more other vehicle before accepting the hacker attack detection. A maximum amount of software consistency checks between vehicles can be preset, meaning that, for example, after five negative consistency checks the hacker attack is considered to be detected. Alternatively, the consistency check is expected to be negative after one negative consistency check between the vehicle and one other further vehicle. The number of required negative consistency checks in order to detect the hacker attack can be two, three, four, five, ten and/or twenty.

This embodiment is based on the condition that all participating vehicles comprise a processing unit that provides the software consistency check. All participating vehicle hence are configured in a way that the software for the consistency check is installed on the respective processing unit. The electronic key data is exchanged by, for example, vehicle to vehicle communication connections between communication interfaces of the participating vehicles. This is another effective way to detect the hacker attack on the vehicle.

Another embodiment comprises determining the hacker attack information by executing an antivirus software on the processing unit of the vehicle. The hacker attack detection requires a virus confirmation by the executed antivirus software. Hence, an antivirus software monitoring the vehicle for threat detection is possible. In case such a virus threat was detected by the vehicle itself, the hacker attack is expected or considered to be detected. This allows an easy and cost-effective way to provide hacker attack detection means since no data comparison or other steps are necessary, but simply the antivirus software performs the search for indications of the hacker attack.

Moreover, an embodiment comprises determining the hacker attack information by transmitting vehicle data to an external device, preferably the external processing device. The hacker attack detection requires that the external device compares the transmitted vehicle data with respective data from another vehicle and/or provided by the external device. The hacker attack detection requires further that the external device determines that the compared data differ by more than a maximum deviation. The transmitted vehicle data represent, for example, speed, position and/or an activated autonomous driving mode of the vehicle. The external device receives the data and performs a consistency check. Thereby, it compares the received data with data that represent a common property and is available to the external device. The data available to the external device may be referred to as respective data. The respective data can be provided by the other vehicle, preferably the other vehicle located in the environment of the vehicle. Alternatively or additionally, at the time of the consistency check the data can already be stored in a data storage of the external device. This means, data may have already been sent to the external device, for example by a further external device.

For example, the other vehicle provides map data containing speed information on at least one vehicle in the environment of the other vehicle that provides the map data. The speed information may be provided based on camera data captured by a camera of the other vehicle. The provided vehicle data in this example are preferably speed data representing the current speed of the vehicle that provides the vehicle data. The external device can then compare the received speed data with the speed information represented by the provided map data. The vehicle data and the respective data hence represent a common property, namely the speed of the vehicle that may be affected by a hacker attack. Alternatively or additionally, the other vehicle can provide its own speed, position and/or other data describing the other vehicle itself and the vehicle can vehicle data describing the other vehicle, such as camera data captured by the camera of the vehicle. It is possible that after performing the consistency check, the external device sends a result information of the consistency check back to the vehicle, so that the vehicle receives the information if it has been hacked or not. If the compared data match, there has been no hacker attack. If the compared data do not match, meaning they differ by more than the maximum deviation, the hacker attack is considered to be detected. Preferably in case of the detected hacker attack, the external device remotely sets the driving mode of the hacked vehicle to the reduced autonomous driving mode intended for the situation of the detected hacker attack. It is hence possible to outsource the hacker attack detection to the external device, for example, to save processing capacities of the processing unit of the vehicle.

A preferred embodiment comprises that if the hacker attack represents a detected hacker attack, the assigned reduced autonomous driving mode comprises performing an emergency stop routine. Such a reduced autonomous driving mode can be referred to as a fail-safe autonomous driving mode. This fail-safe autonomous driving mode is an offline mode, meaning that no online service is available in this reduced autonomous driving mode. The fail-safe autonomous driving mode as reduced autonomous driving mode is preferably provided only in the event of the hacker attack, meaning in the event that the vehicle was hacked. This reduced autonomous driving mode is independent from the current driving mode of the vehicle, meaning that a switch to the fail-safe autonomous driving mode as reduced autonomous driving mode is possible starting from any other driving mode, meaning from all reduced autonomous driving modes as well as the fully autonomous driving mode.

The fail-safe autonomous driving mode provides preferably only a basic autonomous driving functionality to drive the vehicle autonomously to a safe area. Driving to the safe area is referred to as performing the emergency stop routine. The emergency stop routine can meet the following conditions: The vehicle always uses the slowest driving lane, drives at a minimum allowed speed and/or informs the at least one other vehicle in its environment about its current situation, meaning that it is driving in the respective reduced autonomous driving mode, which is the fail-safe autonomous driving mode. Additionally, the vehicle can inform the surrounding vehicles about the fact that it has been attacked by a hacker attack.

However, the vehicle in the described fail-safe autonomous driving mode always tries to reach the safe area located as close as possible to a current position of the vehicle. The safe area can be, for example, an emergency lane on a motorway, a parking slot and/or an emergency rest stop. Preferably, in this reduced autonomous driving mode the autonomous driving functions are completely isolated from other vehicle functions so that only a minimum set of functions is active that is sufficient to drive the vehicle to the safe area, meaning the emergency stop position. At the end of the emergency stop routine the vehicle stands still and a brake system, particularly a parking brake of the vehicle, is activated. Then, for example, a recovery from the hacker attack can be performed.

The fail-safe autonomous driving mode furthermore comprises: disabling autonomous driving and/or a service related to autonomous driving at least at the end of the emergency routine; providing a security alert within the vehicle; transmitting a security alert to the at least one other vehicle in the environment of the vehicle; analyzing the autonomous driving behavior of the vehicle and providing a mitigation action, for example, disabling a failed sensor and/or using a backend solution for rebooting the autonomous driving mode of the vehicle and/or stopping the vehicle; providing a fail-safe; and/or providing a redundancy and/or data by the external device that collects data from the at least one other vehicle.

It is furthermore or alternatively possible to observe data traffic within and assigned to the vehicle. Once, a specific service, for example, a weather information provided by a navigation system of the vehicle, is associated with a large amount of generated and/or received data, which is particularly larger than respective data generated and/or received under usual conditions, this large amount of data can as well be used as detection feature indicating a hacker attack. In summary, multiple different ways and identifying features are provided in order to provide reliable hacker attack detection by the vehicle and/or the external device.

According to a preferred embodiment, after performing the emergency stop routine the vehicle restarts the autonomous driving mode by activating an autonomous mode software. The autonomous mode software is stored in a backup memory of the vehicle. The backup memory is preferably comprised by the processing unit. Alternatively or additionally, the backup memory can be an individual backup memory device of the vehicle. If the restart is successful, the driving mode switches back to the autonomous driving mode. The backup memory is a memory device without write permission. In other words, the autonomous mode software is stored in a secured area of the vehicle, preferably of the processing unit. For the secured area of the vehicle, no write access is given. Write permission to the backup memory may be given to, for example, the manufacturer of the vehicle and/or a certified workshop. Writing on the backup memory is hence only possible for the manufacturer and/or with a special tool, to which only the manufacturer and the certified workshop have access. In general, software for both the reduced autonomous driving mode in case of the hacker attack, meaning the fail-safe autonomous driving mode, and the described backend software, meaning the autonomous mode software, is stored in the backup memory. Therefore, the control algorithm for the described reduced autonomous driving mode is independent of any interference with the processing unit or any other device of the vehicle by the hacker attack.

Once the vehicle arrives at the safe area at the end of the emergency stop routine, the processing unit tries to recover from the fail-safe autonomous driving mode. This is done by restarting the autonomous driving mode from the backup memory. The software restarted or rebooted for this, meaning the autonomous mode software, is located in the secured area of the backup memory. If the recovery of the autonomous mode software is successful, the fully autonomous driving mode is activated and the vehicle can, for example, provide the online function again. This means that the vehicle preferably sends a diagnosis report to the external device, preferably the external processing device, in order to report the detected hacker attack. If the recovery however is not successful, meaning that restarting the autonomous mode software from the backup memory failed, the driving mode of the vehicle remains in the described fail-safe mode with no online connection. Preferably, in this situation only a manual driving mode is allowed. Preferably, the vehicle remains at the safe area at the end of the emergency stop routine as long as no restarting of the autonomous mode software is possible.

In summary, the autonomous driving vehicle is monitored by determining continuously the functional state information and by switching the driving mode of the vehicle depending on the functional state information to one of the in total four described reduced autonomous driving modes. These are the online/offline fully autonomous driving mode with limited non-relevant functions, the online limited autonomous driving mode, the online critical autonomous driving mode and the offline fail-safe autonomous driving mode.

Another aspect of the invention is concerned with a vehicle, The vehicle comprises a processing unit. The vehicle is configured to carry out the described method, meaning in particular all steps which are performed by the processing unit and/or another component of the vehicle, such as, for example, a sensor or other device or a service of the vehicle. The vehicle is preferably a passenger vehicle, a goods vehicle, such as a truck, a motorcycle, a bus and/or a moped.

Another aspect of the invention is concerned with a computer program product stored in a processing unit of a vehicle. The vehicle can be the vehicle as described above. The computer program product comprises instructions which, when the program is executed by the processing unit, cause the processing unit to carry out the described method. Data necessary to carry out the method are provided, for example, via a communication interface of the vehicle that provides data for the computer program product.

A further aspect of the invention is concerned with a processing unit configured to carry out the described method. The processing unit is a data processing device or, in other words, a processor. The processing unit may comprise one or more microprocessors and/or one or more microcontrollers. Further, the processing unit may comprise program code that is designed to perform the method when executed by the processing unit. The program code may be stored in a data storage of the processing unit.

The individual embodiments of the described methods as well as a combination of the described embodiments of the method are considered as embodiments of the inventive vehicle, the inventive computer program product as well as the inventive processing unit, if they are applicable.

The invention also comprises embodiments that provide features which afford additional technical advantages.

The invention also comprises the combinations of the features of the different embodiments.

In the following an exemplary implementation of the invention is described. The figures show:
- Fig. 1: a schematic drawing of a vehicle with an autonomous driving mode;
- Fig. 2: a schematic representation of a method to operate an autonomous driving vehicle; and
- Fig. 3: a schematic representation of a method to determine a hacker attack.

In the figures identical reference signs indicate elements that provide the same function.

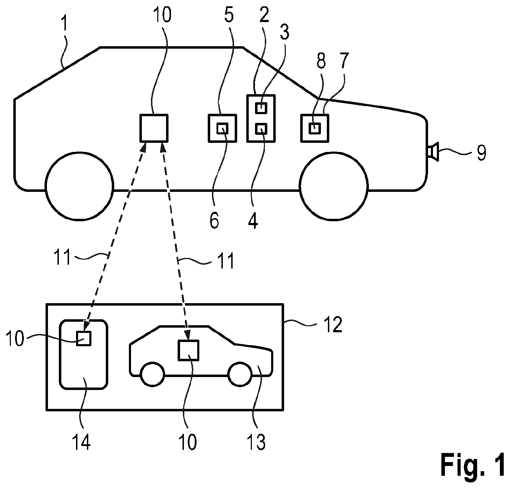

Fig. 1 shows a vehicle 1 that comprises a processing unit 2. The processing unit 2 can be a processor. The processing unit 2 comprises a computer program product 3 that is stored in the processing unit 2, preferably in a data storage of the processing unit 2. Furthermore, the processing unit 2 comprises information on a driving mode 4 of the vehicle 1 so that the processing unit 2 provides a control command for autonomous driving of the vehicle 1. The processing unit 2 is hence configured to provide commands for a longitudinal and transverse guidance of the vehicle, meaning it provides commands for a drive, brake and steering system of the vehicle. The autonomous driving mode as driving mode 4 is preferably a fully autonomous driving mode with both online and offline functions. An offline function can be performed by the vehicle 1 itself, preferably by the processing unit 2 in combination with at least one other component of vehicle 1. An online function requires external data and is hence based on received data.

Vehicle 1 comprises preferably a backup memory 5 in which an autonomous mode software 6 is stored. The backup memory 5 can be an individual device or it can be included into the processing unit 2 of the vehicle 1.

Vehicle 1 can comprise a navigation system 7 that provides map data 8. Furthermore, vehicle 1 may comprise a sensor 9, which is here exemplarily sketched as a front camera. Alternatively, the sensor 9 can be a Lidar device, an infrared sensor, a temperature sensor, a velocity sensor, an accelerator sensor, a rear camera and/or a side camera and/or any other sensor device of the vehicle 1. The sensor 9 preferably provides sensor data for the processing unit 2.

The vehicle 1 comprises a communication interface 10 so that a communication connection 11 to an external device 12 is possible. The communication connection 11 is preferably wireless and, for example, based on a wireless local area network (WLAN), a Bluetooth connection and/or a mobile data network, meaning a mobile internet connection. The mobile data network can be based on mobile radio standard long term evolution (LTE), long term evolution advanced (LTE-A), fifth generation (5G) or sixth generation (6G).

The external device 12 can be another vehicle 13 and/or an external processing device 14, such as a server and/or another computer. The external processing device 14 can be referred to as backend and/or cloud.

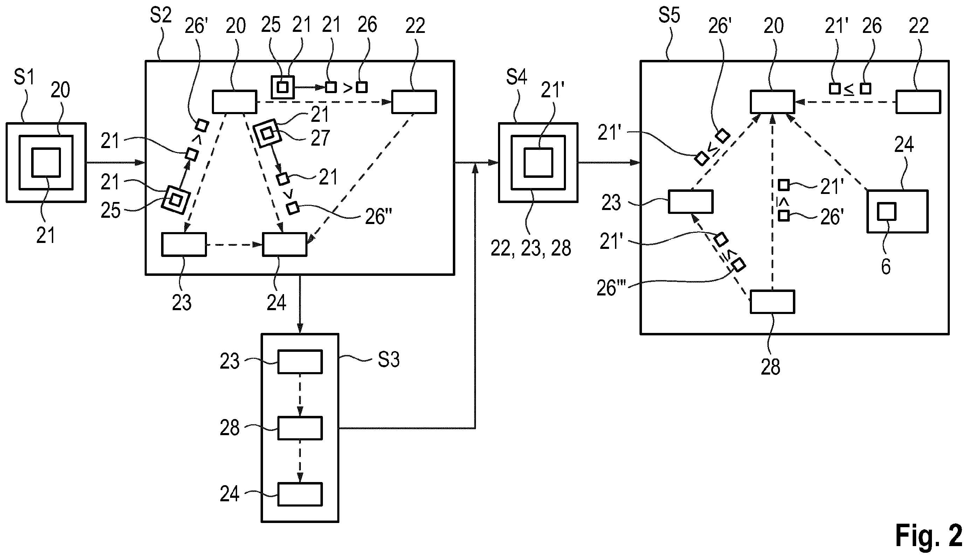

Fig. 2 shows a method for operating the autonomous driving vehicle 1. A step S1 comprises determining a functional state information 21. This is done when the vehicle in this example is driving in a driving mode 4 which is an autonomous driving mode 20. The autonomous driving mode 20 can also be referred to as online/offline fully autonomous driving mode. In the autonomous driving mode 20 online and offline functions are both available. The online function is typically based on data provided by the external device 12 via the communication connection 11. The offline function is typically based on data provided by the vehicle 1.

The functional state information 21 represents a functional state of a device and/or a service relevant for autonomous driving of the vehicle 1. The device is, for example, the sensor 9. Based on sensor data captured or collected by the sensor 9, which is in this example camera data, autonomous driving is performed. The service is, for example, a traffic forecast service based on data received from the external device 12. The exemplarily named services are typically provided by the navigation system 7 of the vehicle 1. For example, a current driving route autonomously determined by the navigation system 7 can be based on the traffic forecast service. The service is hence relevant for autonomous driving of the vehicle 1. The described device and service are just an example. Other devices and/or services relevant for autonomous driving are possible.

The functional state information 21 is preferably zero, if the device and/or the service functions without restriction. If this is not the case, the functional state information 21 is preferably a value greater than zero and up to 1.

In another step S2 the driving mode 4 of the vehicle 1 is switched from an autonomous driving mode 20 to one of multiple functional state dependent reduced autonomous driving modes 22, 23, 24. This is done, if the determined functional state information 21 is greater than a threshold value 26, 26', 26" of the respective reduced autonomous driving mode 22, 23, 24. The multiple reduced autonomous driving modes 22, 23, 24 differ from one another in a level of restriction of autonomous functions compared to the autonomous driving mode 20.

In connection with the switch between the autonomous driving mode 20 and the reduced autonomous driving mode 22, the functional state information 21 comprises a performance reduction information 25. The performance reduction information 25 represents a limitation of a vehicle processing power of the processing unit 2 of the vehicle 1 and/or a limitation of data transfer within the vehicle 1 and/or between the vehicle 1 and the external device 12. The assigned reduced autonomous driving mode 22 limits at least one function of the vehicle 1 which is non-relevant for autonomous driving. This reduced driving mode 22 is activated, if the described determined functional state information 21 is greater than the threshold value 26, which is specific for this kind of limitation within the vehicle 1. The limitation in bandwidth and/or processing power results hence in the reduced autonomous driving mode 22 which could also be referred to as online/offline fully autonomous driving mode with limited non-relevant function. The non-relevant function is, for example, a comfort function, for example, a radio or music system of the vehicle 1 and/or a seat heating function of the vehicle 1. The music system may stream music data from the external device 12. The not-necessary for autonomous driving function is at least reduced in its performance or even completely deactivated or temporarily paused. A service provided by data from the external device 12 can be reduced in a way that, for example, only every several minutes the data is received that is necessary for the service. Contrarily, traffic information, especially regarding the surroundings of the vehicle 1, are very important for autonomous driving and hence considered as relevant for autonomous driving so that this kind of data is still received although the reduced autonomous driving mode 22 is active. The remaining and available data bandwidth is hence free of, for example, unnecessary music data transfer so that the necessary traffic information can still be received. It is also possible to switch to the reduced autonomous driving mode 22 if too much data is generated by the device and/or the service compared to the usual data generation of the device or service, respectively.

The performance reduction information 25 can alternatively or additionally represent a disruption and/or failure of the device of the vehicle 1, such as the sensor 9. The assigned reduced autonomous driving mode 23 increases data reception from the external device 12. This means that data that is missing because of the disruption and/or failure of the device is replaced by respective data provided by the external device 12. The external device 12 is either the other vehicle 13 and/or the external processing device 14. This results in another functional state information 21 compared to the previously described functional state information 21 representing the limitation of the processing power of the processing unit 2 and/or the limitation in data transfer. Therefore, the determined functional state information 21 comprising the performance reduction information 25 representing the disruption and/or failure of the device is greater than another threshold 26'. The thresholds 26 and 26' are different from one another.

A common functional state results typically in a common functional state information 21 meaning that a malfunction of, for example, the front camera as sensor 9 and a malfunction of a Lidar device as sensor 9 preferably result in the same or at least in a comparable functional state information 21. Preferably, they both result in a functional state information 21 which is greater than the common threshold value 26'. Alternatively, a data bandwidth limitation as well as the processing power limitation typically result in a common functional state information 21 or at least a comparable one so that the respective functional state information 21 is greater than the threshold value 26 but preferably smaller than the threshold value 26'.

In summary, the functional state information 21 can comprise the performance reduction information 25 that represents a reduction of the performance of the device of the vehicle 1 and/or the service of the vehicle 1. The device is preferably a vehicle component. The service is preferably an operating resource of the vehicle 1, for example, its processing power or data bandwidth for internal or external communication and/or data transfer.

The functional state information 21 can comprise a hacker attack information 27 representing a detection of a hacker attack on the vehicle 1. If this is the case, the respective functional state information 21 is greater than the threshold value 26" so that this kind of attack on the vehicle 1 can be identified individually. The respective reduced autonomous driving mode 24 is preferably an offline fail-safe autonomous driving mode meaning that in this mode an emergency stop routine is performed. The emergency stop routine comprises, for example, that the vehicle 1 is driving with the minimal allowed speed on a lane of a road with the slowest average speed. It may also comprise informing the other vehicle 13 and/or the external processing device 14 about the hacker attack and/or its switch to the reduced autonomous driving mode 24.

Furthermore, in this mode all online functions are disabled. Additional a security alert is performed. Also, an analysis of an autonomous driving behavior compared with the environment as well as mitigation actions are performed. Mitigation actions are, for example, disabling the failed sensor 9 using a backup solution for the specific sensor 9 and/or stopping the vehicle 1 at a save space such as an emergency lane and/or a parking slot. In other words, this reduced autonomous driving mode 24 is a fail-safe mode. It is possible that the data from other vehicles 13 and/or the external processing device 14 are still collected, meaning that the system is still online so that, for example, redundant data can be collected by the vehicle 1. In general, a switch to the reduced autonomous driving mode 24 is possible starting from all other described driving modes 4, meaning, for example, the autonomous driving mode 20 and/or the reduced autonomous driving modes 22, 23.

In a step S3 the driving mode 4 is switched from the reduced autonomous driving mode 23 to a further reduced autonomous driving mode 28. In the reduced autonomous driving mode 23 data is received from the external device 12. However, if it is determined that no sufficient data is received from external device 12, that replaces data missing due to the disrupted and/or faulty device, the further reduced autonomous driving mode 28 is activated. The further reduced autonomous driving mode 28 provides only limited autonomous driving and can be described as an online critical autonomous driving mode. The switching to the reduced autonomous driving mode 28 may happen, if no data is available from the surrounding other vehicle 13 and/or the external processing device 14 that can replace the data missing due to the defect component, meaning the disrupted and/or faulty device. Sufficient data is, for example, available, if more than 50 percent of the missing data is provided by the external device 12. The limited autonomous driving due to the reduced autonomous driving mode 28 preferably comprises limiting a speed of the vehicle 1 to a maximum speed and/or prohibiting overtaking of other road users along a driving route of the vehicle 1.

If the hacker attack is detected after the driving mode 4 has beens switched to the reduced autonomous driving mode 28, it is possible that the driving mode 4 switches to the reduced autonomous driving mode 24.

A step S4 can comprise further determination of the functional state information 21' while operating the vehicle 1 in one of the reduced autonomous driving modes 22, 23, 28. If the determined further functional state information is smaller than or equal to one of the already mentioned thresholds 26, 26', 26" of the respective reduced autonomous driving mode 22, 23, 28 switching back to a less reduced autonomous driving mode 22, 23, and preferably the autonomous driving mode 20 is performed in a step S5. This means that the reduced autonomous driving mode 22 can switch back to the autonomous driving mode 20, if no limitation in bandwidth and/or processing power occurs any more. Alternatively or additionally, the reduced autonomous driving mode 23 is changed back to the autonomous driving mode 20, if no device failure and/or disruption is observed anymore. If the vehicle 1 is driving in the reduced autonomous driving mode 28 as driving mode 4 and now sufficient data is received from the external device 12, the driving mode 4 can increase to the reduced autonomous driving mode 23. If also the component failure, meaning the device failure and/or disruption, is solved, the driving mode 4 can switch back from the reduced autonomous driving mode 28 to the autonomous driving mode 20.

In case of the reduced autonomous driving mode 24, another procedure is performed. Meaning that after performing the emergency stop routine when the vehicle 1 preferably stands still, the vehicle 1 restarts the autonomous driving mode 20 by activating the autonomous mode software 6 stored in the backup memory 5 of vehicle 1. Only if the restart is successful, the driving mode 4 switches back to the autonomous driving mode 20. If not the driving mode 4 remains in the reduced autonomous driving mode 24 meaning in the offline fail-safe autonomous driving mode. The software and commands for the reduced autonomous driving mode 25 are preferably stored in the backup memory 5 together with the autonomous mode software 6. The reason for this is that preferably the backup memory 5 is a separated memory device and/or an included memory device that is located in a secured area of the processing unit 2 without any write access. This means that to write on the backup memory 5 only, for example, the manufacturer itself or a certified workshop is allowed so that, for example, a special tool is needed in order to write data on the backup memory 5. This means that the backup memory 5 is in any case not affected by the hacker attack so that it is made sure that the autonomous mode software 6 is not influenced by the detected hacker attack.

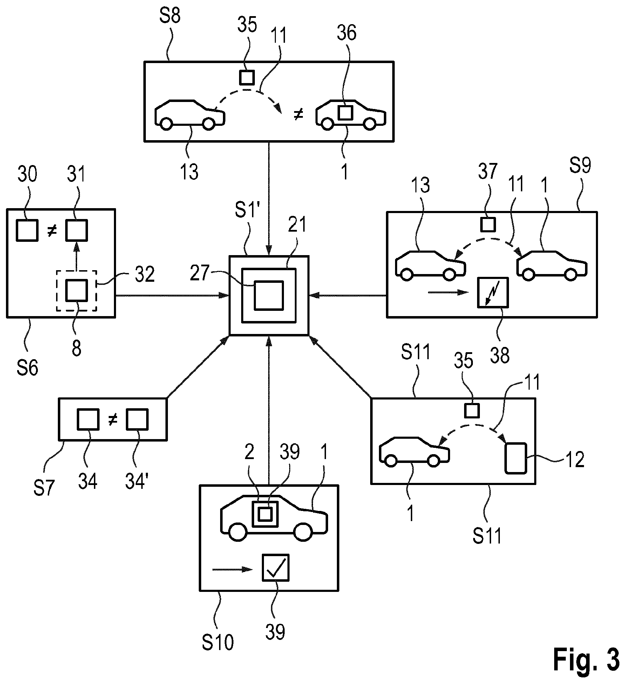

Fig. 3 shows various possibilities of how the hacker attack information 27 can be determined as an information representing the detection of the hacker attack on the vehicle 1. In a step S6, the hacker attack information 27 is determined by comparing current vehicle data 30 captured by the device of the vehicle 1, such as the sensor 9, with expected vehicle data 31. The expected vehicle data 31 are determined by applying an expectation determination algorithm 32 on the map data 8 provided by the vehicle 1. The map data 33 are provided by the navigation system 7. The hacker attack detection requires that the compared data, meaning the current vehicle data 30 and the expected vehicle data 31 differ by more than a maximum deviation. This means they have to be unequal to one another. The expectation determination algorithm is an algorithm that comprises information on how to predict current vehicle data 30 depending on map data 8.

A step S7 comprises determining the hacker attack information 27 by comparing different device data 34, 34'. The device data 34, 34' is provided by different devices of the vehicle 1, for example, by two different sensors 9. However, the device data 34, 34' represent each a common kind of data, for example, the same physical property measured by applying different methods and/or different sensors 9. The hacker attack detection requires that the compared device data 34, 34' differ by more than a maximum deviation meaning that there are not equal to one another.

Alternatively or additionally, in a step S8 the determination of the hacker attack information 27 comprises comparing received vehicle data 35 provided by the other vehicle 13 with respective internal vehicle data 36. The received vehicle data 35 are provided via the communication connection 11. If the compared data, meaning the received vehicle data 35 and the internal vehicle data 36 differ by more than a maximum deviation, meaning they are not equal, the hacker attack is detected. The data provided by the other vehicle 13 can be transmitted directly from the other vehicle 13 to vehicle 1 or via the external processing device 14, for example, via a server unit.

Alternatively or additionally, a step S9 comprises determining the hacker attack information 27 by exchanging electronic key data 37 with the at least one further vehicle 13. Afterwards a software consistency check 38 is performed between the exchanged electronic key data 37. This means that both the other vehicle 13 as well as the vehicle 1 each create the electronic key data 37 and transmit it to the respective other vehicle 1, 13 via the communication connection 11. The software consistency check 38 is preferably performed by the respective processing unit 2 of both concerned vehicles 1, 13. The hacker attack detection requires that executing the software consistency check 38 is negative, meaning that at least one vehicle 1, 13 detects that the received electronic key data 37 is incorrect and has hence been tempered with so that this can be interpreted as an indication for a hacker attack on the respective other vehicle 1, 13. Preferably, electronic key data 37 is exchanged with multiple other vehicles 13 in order to be sure about the result of the software consistency check 38.

Alternatively or additionally, in a step S10 the hacker attack information 27 is determined by executing an antivirus software 39 on the processing unit 2 of the vehicle 1. The hacker attack detection requires a virus confirmation by the executed antivirus software 39.

Alternatively or additionally, in a step S11 determining the hacker attack information 27 comprises that vehicle data is transmitted to the external device 12, which is here preferably the external processing device 14. Hacker attack detection then requires that the external device 12 compares the received vehicle data 35 with respective data from the at least one other vehicle 13 that are provided by the external device 12 itself and determines that the compared data differ by more than a maximum deviation. If this is the case, the external device 12 sends, for example, an alert message to vehicle 1 informing it about the detected hacker attack. Then the other vehicle 13 may remote control the vehicle 1 and particularly remote control the switching of the driving mode 4 to the reduced autonomous driving mode 24.

The described method and its steps are preferably at least partially executable by the computer program product 3 stored in the processing device 2. In summary, the invention shows an isolation of a vehicle function for an autonomous driving vehicle 1.

### REFERENCE SIGNS:

- 1: vehicle
- 2: processing unit
- 3: computer program product
- 4: driving mode
- 5: backup memory
- 6: autonomous mode software
- 7: navigation system
- 8: map data
- 9: sensor
- 10: communication interface
- 11: communication connection
- 12: external device
- 13: other vehicle
- 14: external processing device
- 20: autonomous driving mode
- 21: functional state information
- 22: reduced autonomous driving mode
- 23: reduced autonomous driving mode
- 24: reduced autonomous driving mode
- 25: performance reduction information
- 26: threshold value
- 26': threshold value
- 26": threshold value
- 27: hacker attack information
- 28: reduced autonomous driving mode
- 30: current vehicle data
- 31: expected vehicle data
- 32: expectation determination algorithm
- 33: transmitted vehicle data
- 34: device data
- 34': device data
- 35: vehicle data
- 36: internal vehicle data
- 37: electronic key data
- 38: software consistency check
- 39: antivirus software
- S1-S11: step

## Claims

1. Method for operating an autonomous driving vehicle (1) comprising the following steps:
- determining (S1) a functional state information (21) representing a functional state of a device and/or a service relevant for autonomous driving of the vehicle (1); and
- switching (S2) a driving mode (4) of the vehicle (1) from an autonomous driving mode (20) to one of multiple functional state dependent reduced autonomous driving modes (22, 23, 24, 28), if the determined functional state information (21) is greater than a threshold value (26, 26', 26") of the respective reduced autonomous driving mode (22, 23, 24, 28), wherein the multiple reduced autonomous driving modes (22, 23, 24, 28) differ from one another in a level of restriction of autonomous functions compared to the autonomous driving mode (20),
wherein the functional state information (21) comprises a performance reduction information (25) representing a reduction of a performance of the device and/or the service, wherein if the performance reduction information (25) represents a disruption and/or failure of the device the assigned reduced autonomous driving mode (23) increases data reception from an external device (12), wherein the method comprises after switching to the assigned reduced autonomous driving mode (23) determining if sufficient data is received that replaces data missing due to the disrupted and/or faulty device, and if this is not the case switching the driving mode (4) to a further reduced autonomous driving mode (28) that provides only limited autonomous driving (S3).

2. Method according to claim 1, wherein if the performance reduction information (25) represents a limitation of a vehicle processing power of a processing unit (2) of the vehicle (1) and/or a data transfer, the assigned reduced autonomous driving mode (22) limits at least one function of the vehicle (1) which is non-relevant for autonomous driving.

3. Method according to any of claims 1 or 2, wherein the device is a sensor (9) of the vehicle (1) and the external device (12) is another vehicle (13) and/or an external processing device (14).

4. Method according to any of the preceding claims, wherein the limited autonomous driving comprises limiting a speed of the vehicle (1) to a maximum speed and/or prohibiting overtaking of other road users along a driving route of the vehicle (1).

5. Method according to any of the preceding claims, comprising further determination (S4) of the functional state information (21') while operating the vehicle (1) in the reduced autonomous driving mode (22, 23, 28) and if the determined further functional state information (21) is smaller than or equal to the threshold value (26, 26', 26") of the respective reduced autonomous driving mode (22, 23, 28), switching back (S5) of the driving mode (4) to a less reduced autonomous driving mode (20, 23), particularly the autonomous driving mode (20).

6. Method according to any of the preceding claims, wherein the functional state information (21) comprises a hacker attack information (27) representing a detection of a hacker attack on the vehicle (1).

7. Method according to claim 6, comprising determining (S6) the hacker attack information (27) by comparing current vehicle data (30) captured by the device of the vehicle (1) with expected vehicle data (31) determined by applying an expectation determination algorithm (23) on map data (8) provided by the vehicle (1), wherein hacker attack detection requires that the compared data (30, 31) differ by more than a maximum deviation.

8. Method according to any of claims 6 and 7, comprising determining (S7) the hacker attack information by comparing device data (34, 34') provided by different devices of the vehicle (1) representing a common kind of data, wherein hacker attack detection requires that the compared data differ by more than a maximum deviation.

9. Method according to any of claims 6 to 8, comprising determining (S8) the hacker attack information (27) by comparing received vehicle data (35) provided by another vehicle (13) with respective internal vehicle data (36), wherein hacker attack detection requires that the compared data differ by more than a maximum deviation.

10. Method according to any of claims 6 to 9, comprising determining (S9) the hacker attack information (27) by exchanging electronic key data (37) with at least one other vehicle (13) and performing a software consistency check (38) between the exchanged electronic key data (37), wherein hacker attack detection requires that the consistency check (38) is negative.

11. Method according to any of claims 6 to 10, comprising determining (S10) the hacker attack information (27) by executing an antivirus software (39) on a processing unit (2) of the vehicle (1), wherein hacker attack detection requires a virus confirmation by the executed antivirus software (39).

12. Method according to any of claims 6 to 11, comprising determining (S11) the hacker attack information (27) by transmitting vehicle data to an external device (12), wherein hacker attack detection requires that the external device (12) compares the transmitted vehicle data with respective data from another vehicle (13) and/or provided by the external device (12) and determines that the compared data differ by more than a maximum deviation.

13. Method according to any of the claims 6 to 12, wherein if the hacker attack information (27) represents a detected hacker attack, the assigned reduced autonomous driving mode (24) comprises performing an emergency stop routine.

14. Method according to claim 13, wherein after performing the emergency stop routine the vehicle (1) restarts (S5) the autonomous driving mode (20) by activating an autonomous mode software (6) stored in a backup memory (5) of the vehicle (1), wherein if the restart is successful the driving modes switches back to the autonomous driving mode (20).

15. Computer program product (3) stored in a processing unit (2) of a vehicle (1) comprising instructions which, when the program is executed by the processing unit (2), cause the processing unit (2) to carry out the method according to any of the claims 1 to 14.

16. A processing unit (2) configured to carry out the method according to any of the claims 1 to 14.

17. Vehicle (1) comprising a processing unit (2) according to claim 16.

## Patentansprüche

1. Verfahren zum Betrieb eines Fahrzeugs für autonomes Fahren (1), das die folgenden Schritte umfasst:
- Bestimmen (S1) einer Funktionszustandsinformation (21), die einen Funktionszustand eines Geräts und/oder einer Dienstleistung darstellt, die für das autonome Fahren des Fahrzeugs (1) relevant ist; und
- Umschalten (S2) des Fahrmodus (4) des Fahrzeugs (1) von einem autonomen Fahrmodus (20) auf einen der mehreren, funktionszustandsabhängigen reduzierten autonomen Fahrmodi (22, 23, 24, 28), falls die bestimmbare Funktionszustandsinformation (21) größer als ein Schwellenwert (26, 26', 26") des jeweiligen reduzierten autonomen Fahrmodus (22, 23, 24, 28) ist, wobei die mehrzahligen reduzierten autonomen Fahrmodi (22, 23, 24, 28) sich hinsichtlich des Restriktionsniveaus autonomer Funktionen im Vergleich zueinander zum autonomen Fahrmodus (20) unterscheiden,
wobei die Funktionszustandsinformation (21) eine Leistungsreduktion-Information (25) enthält, die eine Reduktion der Leistung des Geräts und/oder der Dienstleistung darstellt;
falls die Leistungsreduktion-Information (25) eine Störung und/oder einen Ausfall des Geräts repräsentiert, erhöht der zugewiesene reduzierte autonome Fahrmodus (23) den Datenempfang von einer externen Vorrichtung (12), wobei das Verfahren nach dem Umschalten auf den zugewiesenen reduzierten autonomen Fahrmodus (23) die Bestimmung umfasst, ob ausreichend Daten empfangen werden, die fehlende Daten aufgrund der gestörten und/oder fehlerhaften Vorrichtung ersetzen, und wenn dies nicht der Fall ist, das Umschalten des Fahrmodus (4) auf einen weiter reduzierten autonomen Fahrmodus (28), der nur begrenztes autonomes Fahren bereitstellt (S3).

2. Verfahren gemäß Anspruch 1, bei dem, falls die Leistungsreduktion-Information (25) eine Einschränkung der Fahrzeugverarbeitungsleistung einer Verarbeitungseinheit (2) des Fahrzeugs (1) und/oder einer Datenübertragung darstellt, der zugewiesene reduzierte autonome Fahrmodus (22) mindestens eine Funktion des Fahrzeugs (1) einschränkt, die für das autonome Fahren nicht relevant ist.

3. Verfahren gemäß einem der Ansprüche 1 oder 2, bei dem das Gerät ein Sensor (9) des Fahrzeugs (1) ist und die externe Vorrichtung (12) ein anderes Fahrzeug (13) und/oder ein externes Verarbeitungsgadget (14) ist.

4. Verfahren gemäß einem der vorangegangenen Ansprüche, bei dem das begrenzte autonome Fahren die Begrenzung der Geschwindigkeit des Fahrzeugs (1) auf eine Höchstgeschwindigkeit und/oder das Verbot des Überholens anderer Verkehrsteilnehmer entlang einer Fahrstrecke des Fahrzeugs (1) umfasst.

5. Verfahren gemäß einem der vorangegangenen Ansprüche, umfassend das weitere Bestimmen (S4) der Funktionszustandsinformation (21') während des Betriebs des Fahrzeugs (1) im reduzierten autonomen Fahrmodus (22, 23, 28) und falls die bestimmbare weitere Funktionszustandsinformation (21') kleiner als oder gleich dem Schwellenwert (26, 26', 26") des jeweiligen reduzierten autonomen Fahrmodus (22, 23, 28) ist, Zurückschalten (S5) des Fahrmodus (4) auf einen weniger reduzierten autonomen Fahrmodus (20, 23), insbesondere den autonomen Fahrmodus (20).

6. Verfahren gemäß einem der vorangegangenen Ansprüche, bei dem die Funktionszustandsinformation (21) eine Hackerangriff-Information (27) enthält, die die Erkennung eines Hackerangriffs auf das Fahrzeug (1) darstellt.

7. Verfahren gemäß Anspruch 6, das Bestimmen (S6) der Hackerangriff-Information (27) durch Vergleich aktueller Fahrzeugdaten (30), die vom Gerät des Fahrzeugs (1) erfasst wurden, mit erwarteten Fahrzeugdaten (31), die durch Anwendung eines Erwartungsbestimmungsalgorithmus (23) auf Kartendaten (8) des Fahrzeugs (1) ermittelt wurden, wobei die Hackerangriff-Erkennung erfordert, dass die verglichenen Daten (30, 31) sich um mehr als eine maximale Abweichung unterscheiden.

8. Verfahren gemäß einem der Ansprüche 6 und 7, das Bestimmen (S7) der Hackerangriff-Information durch Vergleich von Gerätdaten (34, 34'), die von verschiedenen Geräten des Fahrzeugs (1) bereitgestellt werden, und einen gemeinsamen Datentyp darstellen, wobei die Hackerangriff-Erkennung erfordert, dass die verglichenen Daten sich um mehr als eine maximale Abweichung unterscheiden.

9. Verfahren gemäß einem der Ansprüche 6 bis 8, das Bestimmen (S8) der Hackerangriff-Information (27) durch Vergleich empfangener Fahrzeugdaten (35), die von einem anderen Fahrzeug (13) bereitgestellt werden, mit jeweiligen internen Fahrzeugdaten (36), erfolgt, wobei die Hackerangriff-Erkennung erfordert, dass die verglichenen Daten sich um mehr als eine maximale Abweichung unterscheiden.

10. Verfahren gemäß einem der Ansprüche 6 bis 9, das Bestimmen (S9) der Hackerangriff-Information (27) durch Austausch elektronischer Schlüsseldaten (37) mit mindestens einem anderen Fahrzeug (13) und das Durchführen einer Software-Konsistenzprüfung (38) zwischen den ausgetauschten elektronischen Schlüsseldaten (37) erfolgt, wobei die Hackerangriff-Erkennung erfordert, dass die Konsistenzprüfung (38) negativ ist.

11. Verfahren gemäß einem der Ansprüche 6 bis 10, das Bestimmen (S10) der Hackerangriff-Information (27) durch Ausführen einer Antiviren-Software (39) auf einer Verarbeitungseinheit (2) des Fahrzeugs (1) erfolgt, wobei die Hackerangriff-Erkennung eine Virusbestätigung durch die ausgeführte Antiviren-Software (39) erfordert.

12. Verfahren gemäß einem der Ansprüche 6 bis 11, das Bestimmen (S11) der Hackerangriff-Information (27) durch Übertragen von Fahrzeugdaten an eine externe Vorrichtung (12) erfolgt, wobei die Hackerangriff-Erkennung erfordert, dass die externe Vorrichtung (12) die übertragenen Fahrzeugdaten mit jeweiligen Daten eines anderen Fahrzeugs (13) und/oder von der externen Vorrichtung (12) bereitgestellten Daten vergleicht und feststellt, dass die verglichenen Daten sich um mehr als eine maximale Abweichung unterscheiden.

13. Verfahren gemäß einem der Ansprüche 6 bis 12, bei dem, falls die Hackerangriff-Information (27) einen erkannten Hackerangriff darstellt, der zugewiesene reduzierte autonome Fahrmodus (24) das Durchführen einer Notbremsroutine umfasst.

14. Verfahren gemäß Anspruch 13, wobei nach Durchführung der Notbremsroutine das Fahrzeug (1) den autonomen Fahrmodus (20) neu startet (S5) durch Aktivierung einer autonomen Modussoftware (6), die im Backup-Speicher (5) des Fahrzeugs (1) gespeichert ist, wobei falls der Neustart erfolgreich ist, schaltet sich der Fahrmodus wieder auf den autonomen Fahrmodus (20) zurück.

15. Computerprogramm-Produkt (3), gespeichert in einer Verarbeitungseinheit (2) des Fahrzeugs (1), das Anweisungen enthält, die bei Ausführung des Programms durch die Verarbeitungseinheit (2) die Verarbeitungseinheit (2) zur Durchführung des Verfahrens gemäß einem der Ansprüche 1 bis 14 veranlassen.

16. Eine Verarbeitungseinheit (2), die zur Durchführung des Verfahrens gemäß einem der Ansprüche 1 bis 14 konfiguriert ist.

17. Fahrzeug (1), das eine Verarbeitungseinheit (2) gemäß Anspruch 16 enthält.

## Revendications

1. Procédé de fonctionnement d'un véhicule à conduite autonome (1), comprenant les étapes suivantes :
- la détermination (S1) d'une information d'état fonctionnel (21) représentant un état fonctionnel d'un dispositif et/ou d'un service pertinent pour la conduite autonome du véhicule (1) ; et
- la commutation (S2) d'un mode de conduite (4) du véhicule (1) d'un mode de conduite autonome (20) à un de multiples modes de conduite autonome réduits (22, 23, 24, 28) dépendant de l'état fonctionnel, si l'information d'état fonctionnel (21) déterminée est supérieure à une valeur seuil (26, 26', 26") du mode de conduite autonome réduit respectif (22, 23, 24, 28), dans lequel les multiples modes de conduite autonome réduits (22, 23, 24, 28) diffèrent les uns des autres en un niveau de restriction de fonctions autonomes en comparaison avec le mode de conduite autonome (20),
dans lequel l'information d'état fonctionnel (21) comprend une information de réduction de performance (25) représentant une réduction d'une performance du dispositif et/ou du service, dans lequel, si l'information de réduction de performance (25) représente une perturbation et/ou une défaillance du dispositif, le mode de conduite autonome réduit attribué (23) augmente la réception de données en provenance d'un dispositif externe (12), dans lequel le procédé comprend, après la commutation au mode de conduite autonome réduit attribué (23), la détermination que suffisamment de données sont reçues ou non qui remplacent des données manquant en raison du dispositif perturbé et/ou défaillant, et si cela n'est pas le cas, la commutation du mode de conduite (4) à un mode de conduite autonome réduit davantage (28) qui fournit seulement une conduite autonome limitée (S3).

2. Procédé selon la revendication 1, dans lequel, si l'information de réduction de performance (25) représente une limitation d'une puissance de traitement de véhicule d'une unité de traitement (2) du véhicule (1) et/ou un transfert de données, le mode de conduite autonome réduit attribué (22) limite au moins une fonction du véhicule (1) qui n'est pas pertinente pour la conduite autonome.

3. Procédé selon quelconques des revendications 1 ou 2, dans lequel le dispositif est un capteur (9) du véhicule (1) et le dispositif externe (12) est un autre véhicule (13) et/ou un dispositif de traitement externe (14).

4. Procédé selon de quelconques des revendications précédentes, dans lequel la conduite autonome limitée comprend la limitation d'une vitesse du véhicule (1) à une vitesse maximum et/ou l'interdiction de doubler d'autres utilisateurs de la route le long d'une route de conduite du véhicule (1).

5. Procédé selon de quelconques des revendications précédentes, comprenant la détermination supplémentaire (S4) de l'information d'état fonctionnel (21') durant le fonctionnement du véhicule (1) dans le mode de conduite autonome réduit (22, 23, 28) et si l'information d'état fonctionnel supplémentaire déterminée (21) est inférieure ou égale à la valeur seuil (26, 26', 26") du mode de conduite autonome réduit respectif (22, 23, 28), la recommutation (S5) du mode de conduite (4) à un mode de conduite autonome moins réduit (20, 23), particulièrement au mode de conduite autonome (20).

6. Procédé selon de quelconques des revendications précédentes, dans lequel l'information d'état fonctionnel (21) comprend une information d'attaque par pirate informatique (27) représentant une détection d'une attaque par pirate informatique sur le véhicule (1).

7. Procédé selon la revendication 6, comprenant la détermination (S6) de l'information d'attaque par pirate informatique (27) en comparant des données de véhicule actuelles (30) capturées par le dispositif du véhicule (1) à des données de véhicule attendues (31) déterminée en appliquant un algorithme de détermination d'attente (23) sur des données cartographiques (8) fournies par le véhicule (1), dans lequel la détection d'attaque par pirate informatique nécessite que les données comparées (30, 31) diffèrent selon plus qu'un écart maximum.

8. Procédé selon quelconques des revendications 6 et 7, comprenant la détermination (S7) de l'information d'attaque par pirate informatique en comparant des données de dispositif (34, 34') fournies par différents dispositifs du véhicule (1) représentant un type commun de données, dans lequel la détection d'attaque par pirate informatique nécessite que les données comparées diffèrent selon plus qu'un écart maximum.

9. Procédé selon quelconques des revendications 6 à 8, comprenant la détermination (S8) de l'information d'attaque par pirate informatique (27) en comparant des données de véhicule reçues (35) fournies par un autre véhicule (13) à des données de véhicule internes respectives (36), dans lequel la détection d'attaque par pirate informatique nécessite que les données comparées diffèrent selon plus qu'un écart maximum.

10. Procédé selon quelconques des revendications 6 à 9, comprenant la détermination (S9) de l'information d'attaque par pirate informatique (27) en échangeant des données de clef électronique (37) avec au moins un autre véhicule (13) et en réalisant un contrôle de cohérence de logiciel (38) entre les données de clef électronique échangées (37), dans lequel la détection d'attaque par pirate informatique nécessite que le contrôle de cohérence (38) soit négatif.

11. Procédé selon quelconques des revendications 6 à 10, comprenant la détermination (S10) de l'information d'attaque par pirate informatique (27) en exécutant un logiciel antivirus (39) sur une unité de traitement (2) du véhicule (1), dans lequel la détection d'attaque par pirate informatique nécessite une confirmation de virus par le logiciel antivirus exécuté (39).

12. Procédé selon quelconques des revendications 6 à 11, comprenant la détermination (S11) de l'information d'attaque par pirate informatique (27) en transmettant des données de véhicule à un dispositif externe (12), dans lequel la détection d'attaque par pirate informatique nécessite que le dispositif externe (12) compare les données de véhicule transmises à des données respectives provenant d'un autre véhicule (13) et/ou fournies par le dispositif externe (12) et détermine que les données comparées diffèrent selon plus qu'un écart maximum.

13. Procédé selon de quelconques des revendications 6 à 12, dans lequel, si l'information d'attaque par pirate informatique (27) représente une attaque par pirate informatique détectée, le mode de conduite autonome réduit attribué (24) comprend la réalisation d'une routine d'arrêt d'urgence.

14. Procédé selon la revendication 13, dans lequel, après la réalisation de la routine d'arrêt d'urgence, le véhicule (1) redémarre (S5) le mode de conduite autonome (20) en activant un logiciel de mode autonome (6) stocké dans une mémoire de sauvegarde (5) du véhicule (1), dans lequel, si le redémarrage est réussi, le mode de conduite recommute au mode de conduite autonome (20).

15. Produit programme d'ordinateur (3) stocké dans une unité de traitement (2) d'un véhicule (1), comprenant des instructions qui, lorsque le programme est exécuté par l'unité de traitement (2), amènent l'unité de traitement (2) à effectuer le procédé selon de quelconques des revendications 1 à 14.

16. Unité de traitement (2), configurée pour effectuer le procédé selon quelconques des revendications 1 à 14.

17. Véhicule (1), comprenant une unité de traitement (2) selon la revendication 16.
